# EUROPEAN PATENT SPECIFICATION

(11) **EP 3 789 508 B1**
(45) Date of publication and mention of the grant of the patent: **09.02.2022**
(21) Application number: 18918599.4
(22) Date of filing: 14.12.2018
(51) Int. Cl.: C22C 38/00, C22C 38/04, C22C 38/46, C22C 38/48, C22C 38/50, C21D 8/02

(54) **HOT-ROLLED HIGH-TOUGHNESS AND LOW-TEMPERATURE-RESISTANT H-SHAPED STEEL WITH YIELD STRENGTH OF 460 MPA AND PREPARATION METHOD THEREFOR**
HOCHZÄHER WARMGEWALZTER NIEDRIGTEMPERATURBESTÄNDIGER H-TRÄGER MIT STRECKGRENZE IN 460 MPA-QUALITÄT UND VERFAHREN ZU SEINER HERSTELLUNG
POUTRELLE EN H RÉSISTANTE AUX BASSES TEMPÉRATURES DE HAUTE TÉNACITÉ LAMINÉE À CHAUD DE QUALITÉ LIMITE D'ÉLASTICITÉ DE 460 MPA ET SON PROCÉDÉ DE PRÉPARATION

(30) Priority: 16.05.2018 CN 201810467000
(43) Date of publication of application: 10.03.2021
(73) Proprietor: Shandong Iron and Steel Co., Ltd., 271104 Jinan City, Shandong Province (CN)
(72) Inventor: WANG, Zhongxue, 271104 Jinan City Shandong Province (CN); ZHAO, Peilin, 271104 Jinan City Shandong Province (CN); HAN, Wenxi, 271104 Jinan City Shandong Province (CN); LI, Chao, 271104 Jinan City Shandong Province (CN); GUO, Weida, 271104 Jinan City Shandong Province (CN); FANG, Jinlin, 271104 Jinan City Shandong Province (CN); GUO, Xiuhui, 271104 Jinan City Shandong Province (CN); WU, Yuli, 271104 Jinan City Shandong Province (CN); YANG, Dong, 271104 Jinan City Shandong Province (CN); ZHAO, Chuandong, 271104 Jinan City Shandong Province (CN)
(74) Representative: Murgitroyd & Company
(86) International application number: PCT/CN2018/121100
(87) International publication number: WO 2019/218657

(56) References cited:
- WO-A1-2018/043491
- CN-A- 1 314 957
- CN-A- 102 851 596
- CN-A- 103 243 272
- CN-A- 103 243 272
- CN-A- 103 667 910
- CN-A- 103 667 910
- CN-A- 105 256 246
- CN-A- 108 642 381
- JP-A- 2001 262 225
- US-A1- 2015 204 071

## Description

### Technical Field

The present invention belongs to the technical field of metallurgy, in particular, the present invention relates to a hot rolled high-toughness and low temperature-resistant H-shaped steel with a yield strength greater than or equal to 460MPa and a preparation method thereof.

### Background Art

With the development of energy exploitation towards extremely cold and other complex regions, hot rolled H-shaped steel with a higher comprehensive performance is in urgent need to substitute the existing low-grade H-shaped steel, and when the weight is reduced, a higher reliability is ensured. Meanwhile, to adapt to service environment in extremely cold and other complex regions, a higher requirement is proposed for the low temperature impact toughness, welding performance and lamella tearing resistance performance of the steel, and the demand for the hot rolled H-shaped steel with a higher strength grade is gradually increasing.

At present, different grades of H-shaped steels with the yield strength of greater than 345MPa have been successively developed by hot rolled H-shaped steel manufacturing enterprises in China, and such H-shaped steel is generally manufactured through composite micro-alloying in combination with a hot rolling method. Different enterprises manufactured products of different grades and with different comprehensive performances according to different levels of equipment.

The patent application with the application number of CN201310200230.8 discloses a rolling process of a vanadium-containing hot rolled weather-proof H-shaped steel with a yield strength of 450MPa. The vanadium-containing hot rolled weather-proof H-shaped steel is composed of the following components (wt%): 0.09-0.11 of C, 0.45-0.52 of Si, 1.25-1.38 of Mn, 0.015-0.022 of P, 0.008-0.014 of S, 0.27-0.33 of Cu, 0.35-0.42 of Cr, 0.25-0.32 of Ni, 0.073-0.087 of V, 0.010-0.025 of Al₍ₛ₎, and the balance of Fe and residual trace impurities; the vanadium-containing hot rolled weather-proof H-shaped steel adopts two-stage rapid cooling treatment to realize the object of a yield strength of 450MPa, and a special requirement is proposed on the cooling equipment after rolling.

The patent application with the application number of CN201510044714.7 relates to a hot rolled low temperature-resistant H-shaped steel and a preparation method thereof. The hot rolled H-shaped steel is composed of the following chemical components (wt%): 0.07-0.10% of C, 0.2-0.4% of Si, 1.30-1.60% of Mn, smaller than or equal to 0.020% of P, smaller than or equal to 0.015% of S, 0.015-0.070% of V, 0.010-0.030% of Ti, and the balance of Fe and unavoidable impurities. The production method includes converter smelting, LF refining, continuous casting and rolling. The structure of the H-shaped steel prepared in the present invention is polygonal ferrite and pearlitic structure, and the yield strength is 350-450MPa. A conventional method is adopted in the rolling process of the patent, and the design of chemical components enable that the yield strength after rolling is approximate to 450MPa.

In the above two types of high-strength H-shaped steel and the preparation technology, micro-alloying is combined with different cooling methods, then a certain low-temperature impact toughness is ensured while a higher strength is ensured. On the one hand, the requirements on the cooling equipment is high, and on the other hand, an ordinary device is adopted for rolling, no more improvement can be made on the strength.

The relevant state of the art is represented by CN 103667910 A.

### Summary of the Invention

The present invention provides a hot rolled high-toughness and low temperature-resistant H-shaped steel as detailed in claim 1. Also provided is a preparation method according to claim 4. Advantageous features are provided in the dependent claims.

The objective of the present invention is as follows: to satisfy the requirements of high-strength and high-toughness steel used in marine engineering under extremely cold and other complex environments, a hot rolled high-toughness and low temperature-resistant H-shaped steel with a yield strength greater than or equal to 460MPa and a preparation method thereof are designed and invented, and the H-shaped steel is especially suitable for the manufacturing and use in supporting structures with a higher toughness requirement in regions with an extremely low temperature (marine engineering).

The technical solution of the present invention is as follows:
The high-toughness and low temperature-resistant H-shaped steel with a yield strength of 460MPa of the present invention is composed of the following chemical components according to weight percentage: 0.03%-0.07% of C, smaller than or equal to 0.3% of Si, 1.20%-1.40% of Mn, 0.015%-0.030% of Nb, 0.10%-0.15% of V, 0.015%-0.025% of Ti, 0.25%-0.45% of Ni, 0.30%-0.50% of Cr, 0.010%-0.06% of Als, 0.010%-0.023% of N, smaller than or equal to 0.015% of P, smaller than or equal to 0.010% of S, smaller than or equal to 0.004% of O, and the balance of Fe and unavoidable impurities. Preferably, the V, Ti and Nb elements in the present invention satisfy the formula of 0.10%≤V+Ti+Nb≤0.20%. The H-shaped steel prepared with the requirements of the formula being satisfied can better satisfy the requirements of precipitation strengthening micro-alloying, thereby improving the strength of steel.

In the present invention, nitrogen plays an important role in precipitation of micro-alloyed carbonitride, especially in the steel micro-alloyed with titanium and vanadium. Nitrogen-containing steel not only eliminates increase in cost caused by degassing and denitrification in the refining process in the steelmaking process, but also nitrogen enrichment in the steel can give full play to the effect of the micro-alloying elements, save the amount of the micro-alloying elements, and further reduce the production cost.

The carbonitride of vanadium can be precipitated in the low-carbon steel ferrite and refine the structure of steel. Vanadium nitride has a lower solid solubility than vanadium carbide in the ferrite, when the content of nitride in the vanadium micro-alloyed steel is increased, vanadium nitride can be more easily precipitated in the ferrite, to improve the precipitation strengthening and grain refinement strengthening effect of the vanadium micro-alloyed steel.

The improvement of the content of nitrogen in the vanadium-containing micro-alloyed steel is beneficial for the precipitation of VN, owing to the minimum mismatch between VN and ferrite, VN can become the preferred nucleation position of the ferrite, thereby improving phase change of the ferrite, improving the initial temperature of the phase change, and forming a critical cooling rate of the whole bainite structure.

The present invention further provides a preparation method of the above high-toughness and low temperature-resistant H-shaped steel with a yield strength of 460MPa, including in sequence steps of pretreatment of hot metal, converter smelting, refining, continuous casting, rolling, cooling and straightening, and processes unmentioned in the present invention can all adopt the prior art.

Wherein, in the in the rolling process, the soaking temperature of the heating furnace is 1230-1280°C, the in furnace time of the casting blank is 120-200min; the initial rolling temperature is 1150-1180°C, the water cooling between the finish rolling racks is fully open, and the finish rolling temperature is 750-860°C.

Further, according to the preparation method of the present invention, preferably, the degree of superheat of the continuous casting tundish molten steel is smaller than or equal to 25°C, thereby ensuring the quality of casting blank. A certain content of acid soluble aluminum in the steel should be ensured, to ensure that the molten steel has a favorable deoxidization effect, improve cleanliness of steel, and reduce performance of inclusions in the steel on the performance.

The rolled steel after finish rolling comes out of a finishing mill and then enters a roller table with a heat preservation cover for heat preservation, to ensure uniform temperature drop, and then enters a cold bed for slow cooling.

According to the embodiments of the present invention, the preparation method of the high-toughness and low temperature-resistant H-shaped steel with a yield strength greater than or equal to 460MPa in the present invention specifically includes pretreatment of hot metal, converter smelting, refining, fully protected continuous casting, slow cooling of casting blank in a heat preservation pit, groove rolling process and offline slow cooling process.

Under the conditions of comprehensively considering cost, production process and quality, in the present invention, through low-carbon micro-alloying process design, nitrogen is taken as a valuable alloying element and is retained in the steel as far as possible with a lower content of carbon in combination with other alloying elements at a lower content, to match with the rolling process of rolling of shape steel and cooling after rolling through reasonable optimization of composition proportions in steel. By utilizing the refined crystalline strengthening, precipitation strengthening, and phase change strengthening mechanisms, a high-toughness H-shaped steel which mainly contains a proper amount of bainite + ferrite and includes a small number of pearlitic structures is prepared, wherein the surface layer of the structure is single-phase lower bainite or ferrite + single-phase lower bainite, the inside is ferrite + tiny composite phase structure of pearlite; the bainite can not only increase the strength, plasticity and toughness of steel, but also reduce deformation and cracking of steel, thereby greatly improving the performance and surface quality of steel; the H-shaped steel has high strength, favorable steel performance and high yield, and the difficulty in process control is low, thereby being beneficial for realizing industrial mass production of medium and large high-toughness H-shaped steel products used in low-temperature regions or marine engineering.

The technical solution of the present invention has the following advantages:
1. The low carbon and composite micro-alloying component design concept suitable for normalizing rolling by ordinary rolling mills lowers the high-temperature rolling fore in the rolling process, meanwhile, the design of N-containing composite micro-alloying component is adopted, thereby achieving a higher toughness while realizing the strength of greater than 460MPa on the ordinary hot rolled H-shaped steel rolling mill.
2. To avoid crack defects of casting blank caused by a higher content of N, the continuous casting blank enters a heat preservation pit after going off the line for slow cooling, thereby ensuring surface quality and internal defects of the casting blank.
3. The finished H-shaped steel structure is mainly composed of a proper amount of bainite + ferrite, and includes a small number of pearlitic structures.
4. As to the H-shaped steel products involved in the present invention, the mechanical property is favorable, the yield strength is greater than or equal to 460MPa, the tensile strength is greater than or equal to 600MPa, the elongation is greater than or equal to 18%, the longitudinal impact energy at -40°C is greater than or equal to 100J, and the H-shaped steel products are applicable to be used in regions with an extremely low temperature.

### Brief Description of the Drawings

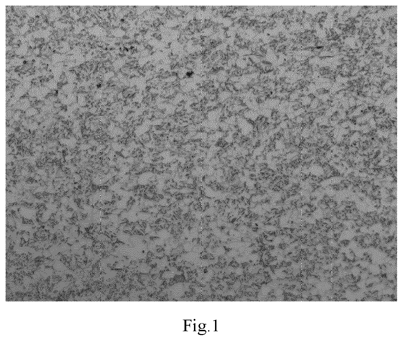

Fig. 1 is a metallographic structure diagram (×200) of a high-toughness and low temperature-resistant H-shaped steel with a yield strength of 460MPa prepared in embodiment 2 of the present invention.

### Detailed Description of the Embodiments

The present invention will be illustrated below with specific embodiments as examples. It should be noted that, the embodiments are merely for further illustrating the present invention, rather than for limiting the protection scope of the present invention, and nonessential modifications and adjustments made by others according to the present invention shall all fall within the protection scope of the present invention.

The continuous casting blank in the following embodiments is all prepared through the following technological process: according to the set chemical component range (Table 1), blast furnace molten iron is taken as a raw material, through converter smelting and refining, the contents of C, Si, Mn, S and P are adjusted and micro-alloying is performed, continuous casting is performed after the components reach target values, the casting blank is directly heated or soaked. The preparation steps of embodiments 1-4 are as follows:
The steel goes through the processes including pretreatment of hot metal, converter smelting, ladle argon blowing, refining, continuous casting, shape steel thread rolling, and slow cooling on a cold bed. Wherein, shape steel thread rolling includes rough rolling and finish rolling. The unmentioned processes of the present invention can all adopt the prior art. The hot rolling process centers on temperature control, the finish rolling temperature at an outer side of the flange is detected, and the rolled material is naturally cooled on the cold bed after rolling. The chemical components and specific processes of embodiments 1-4 are shown in the following Table 1.

**Table 1 Chemical Components (wt%, the balance of Fe)**

| Items | C | Si | Mn | P | S | Cr | V | Ti | Nb | Ni | Al | N |
|---|---|---|---|---|---|---|---|---|---|---|---|---|
| Embodim ent 1 | 0.04 2 | 0.2 5 | 1.3 0 | 0.01 5 | 0.00 7 | 0.2 8 | 0.1 1 | 0.01 5 | 0.02 0 | 0.4 0 | 0.01 2 | 0.01 20 |
| Embodim ent 2 | 0.05 0 | 0.2 3 | 1.4 0 | 0.01 3 | 0.00 8 | 0.3 5 | 0.1 3 | 0.02 5 | 0.02 5 | 0.4 5 | 0.01 6 | 0.01 76 |
| Embodim ent 3 | 0.06 0 | 0.2 2 | 1.2 8 | 0.01 2 | 0.00 6 | 0.2 5 | 0.1 4 | 0.02 0 | 0.03 0 | 0.2 9 | 0.05 | 0.01 95 |
| Embodim ent 4 | 0.04 5 | 0.2 8 | 1.3 8 | 0.01 3 | 0.00 6 | 0.3 1 | 0.1 5 | 0.01 8 | 0.02 6 | 0.3 7 | 0.03 | 0.02 23 |

The hot rolling process conditions of embodiments 1-4 are as shown in Table 2, and are based on the Standards BS EN ISO 377-1997 Sampling Location and Preparation of Mechanical Property Test Samples; for the test methods of the yield strength, tensile strength and elongation, please refer to the Standard ISO6892-1-2009 Tensile Test Method of Metallic Materials at Room Temperature; and for the impact energy test methods, please refer to the Standard ISO 148-1 Metallic Materials-Charpy Pendulum Impact Test, and the results are as shown in Table 3.

**Table 2 Hot rolling process in the embodiments**

| Items | Reheating temperature (°C) | Reheating preservation time (min) | Finish rolling temperature (°C) | Flange thickness mm |
|---|---|---|---|---|
| Embodi ment 1 | 1230 | 120 | 810 | 15 |
| Embodi ment 2 | 1240 | 135 | 850 | 19 |
| Embodi ment 3 | 1250 | 150 | 860 | 23 |
| Embodi ment 4 | 1245 | 150 | 860 | 25 |

**Table 3 Results of mechanical property tests in the embodiments**

| Items | Yield strength (MPa) | Tensile strength (MPa) | Elongation (%) | -40°C AKV (J) |
|---|---|---|---|---|
| Embodiment 1 | 470 | 630 | 25 | 130 |
| Embodiment 2 | 500 | 660 | 20 | 150 |
| Embodiment 3 | 490 | 640 | 22 | 135 |
| Embodiment 4 | 510 | 700 | 21 | 120 |

It can be seen from the table that, in embodiments 1-4 of the present invention, the yield strength is maintained at 460MPa, a favorable extension performance is available, and the impact energy at -40°C is higher, thereby satisfying the using conditions of prepared marine engineering members in the environment with an extremely low temperature, and being applicable to manufacturing offshore oil platforms and ocean shipping vessels and other supporting structural members with a higher low-temperature toughness requirement.

It can be seen from Fig. 1 that, the tissue of the present application is granular bainite + ferritic structure. The bainite dispersed in the type of tissues enhances the strength of steel, and tiny ferrite is of great help to the improvement of toughness and plasticity. Therefore, as to the H-shaped steel with a strength of 460MPa, when the strength is satisfied, the toughness and especially the low-temperature toughness are improved.

Of course, the present invention can also have multiple embodiments. Those skilled in the art can make various corresponding variations and deformations without departing from the scope of the present invention as defined in the appended claims.

## Claims

1. A hot rolled high-toughness and low temperature-resistant H-shaped steel with a yield strength greater than or equal to 460MPa measured using the method in accordance with Standard ISO6892-1-2009Tensile Test Method of Metallic Materials at Room Temperature, wherein the H-shaped steel is composed of the following chemical components according to weight percentage: 0.03%-0.07% of C, smaller than or equal to 0.3% of Si, 1.20%-1.40% of Mn, 0.015%-0.030% of Nb, 0.10%-0.15% of V, 0.015%-0.025% of Ti, 0.25%-0.45% of Ni, 0.30%-0.50% of Cr, 0.010%-0.06% of Als, 0.010%-0.023% of N, smaller than or equal to 0.015% of P, smaller than or equal to 0.010% of S, smaller than or equal to 0.004% of O, and the balance of Fe and unavoidable impurities.

2. The H-shaped steel of claim 1, wherein 0.10%≤V+ Ti+Nb≤0.20%.

3. The H-shaped steel of claim 1 or 2, wherein as to the H-shaped steel, the yield strength is greater than or equal to 460MPa measured using the method in accordance with Standard ISO6892-1-2009Tensile Test Method of Metallic Materials at Room Temperature, the tensile strength is greater than or equal to 600MPa measured using the method in accordance with Standard ISO6892-1-2009Tensile Test Method of Metallic Materials at Room Temperature, the elongation is greater than or equal to 18% measured using the method in accordance with Standard ISO6892-1-2009 Tensile Test Method of Metallic Materials at Room Temperature, and the longitudinal impact energy at -40°C is greater than or equal to 100J measured using the method in accordance with Standard ISO 148-1 Metallic Materials-Charpy Pendulum Impact Test and where the measurement is carried out using Charpy V-notch test.

4. A preparation method of the H-shaped steel of any of claims 1-3, comprising in sequence steps of pretreatment of hot metal, converter smelting, refining, continuous casting, rolling, cooling and straightening,
Wherein, in the rolling process, the soaking temperature of the heating furnace is 1230-1280°C, the in furnace time of the casting blank is 120-200min; the initial rolling temperature is 1150-1180°C, the water cooling between the finish rolling racks is fully open, and the finish rolling temperature is 750-860°C,
wherein the rolled steel after finish rolling comes out of a finishing mill and then enters a roller table with a heat preservation cover for heat preservation, and then enters a cold bed for slow cooling.

5. The preparation method of claim 4, wherein the degree of superheat of the continuous casting tundish molten steel is smaller than or equal to 25°C.

## Patentansprüche

1. Ein warmgewalzter, hochzäher und niedrigtemperaturbeständiger H-förmiger Stahl mit einer Streckgrenze von größer als oder gleich 460 MPa, gemessen unter Verwendung des Verfahrens gemäß Norm ISO6892-1-2009, Zugversuchverfahren für metallische Werkstoffe bei Raumtemperatur, wobei der H-förmige Stahl aus den folgenden chemischen Komponenten gemäß Gewichtsprozent besteht: 0,03 %-0,07 % C, weniger als oder gleich 0,3 % Si, 1,20 %-1,40 % Mn, 0,015 %-0,030 % Nb, 0,10 %-0,15 % V, 0,015 %-0,025 % Ti, 0,25 %-0,45 % Ni, 0,30 %-0,.50 % Cr, 0,010 %-0,06 % Al, 0,010 %-0,023 % N, weniger als oder gleich 0,015 % P, weniger als oder gleich 0,010 % S, weniger als oder gleich 0,004 % O und dem Rest Fe und unvermeidbaren Fremdstoffen.

2. H-förmiger Stahl gemäß Anspruch 1, wobei 0,10 % ≤ V + Ti + Nb ≤ 0,20 %.

3. H-förmiger Stahl gemäß Anspruch 1 oder 2, wobei den H-förmigen Stahl betreffend die Streckgrenze größer als oder gleich 460 MPa, gemessen unter Verwendung des Verfahrens gemäß Norm ISO6892-1-2009, Zugversuchverfahren für metallische Werkstoffe bei Raumtemperatur, ist, die Zugfestigkeit größer als oder gleich 600 MPa, gemessen unter Verwendung des Verfahrens gemäß Norm ISO6892-1-2009, Zugversuchverfahren für metallische Werkstoffe bei Raumtemperatur, ist, die Dehnung größer als oder gleich 18 %, gemessen unter Verwendung des Verfahrens gemäß Norm ISO6892-1-2009, Zugversuchverfahren für metallische Werkstoffe bei Raumtemperatur, ist und die Längsschlagenergie bei -40 °C größer als oder gleich 100 J, gemessen unter Verwendung des Verfahrens gemäß Norm ISO 148-1, Metallische Werkstoffe - Kerbschlagbiegeversuch nach Charpy, ist und wobei die Messung unter Verwendung eines Charpy-Versuchs mit V-Kerbe durchgeführt wird.

4. Ein Herstellungsverfahren des H-förmigen Stahls gemäß einem der Ansprüche 1-3, das der Reihe nach Schritte der Vorbehandlung von warmem Metall, des Konverterschmelzens, des Raffinierens, des Stranggießens, des Walzens, des Auskühlens und des Ausrichtens beinhaltet,
wobei in dem Walzprozess die Haltetemperatur des Heizofens 1230-1280 °C beträgt, die Zeit im Ofen des Gussrohlings 120-200 min beträgt, die Anfangswalztemperatur 1150-1180 °C beträgt, die Wasserkühlung zwischen den Fertigwalzgestellen vollständig geöffnet ist und die Fertigwalztemperatur 750-860 °C beträgt,
wobei der gewalzte Stahl nach dem Fertigwalzen aus einem Fertigwalzwerk austritt und dann auf einen Rollentisch mit einer Wärmeerhaltungsabdeckung zur Wärmeerhaltung eintritt und dann in ein Kaltbett zur langsamen Abkühlung eintritt.

5. Herstellungsverfahren gemäß Anspruch 4, wobei der Grad an Überhitzungswärme der Stahlschmelze im Stranggussverteiler kleiner als oder gleich 25 °C ist.

## Revendications

1. Un profilé acier H laminé à chaud haute ténacité et résistant à basse température présentant une limite d'élasticité supérieure ou égale à 460 MPa mesurée à l'aide du procédé suivant la norme ISO6892-1-2009 Méthode d'essai de traction de matériaux métalliques à température ambiante, le profilé acier H étant composé des constituants chimiques en pourcentage en poids suivants : C à hauteur de 0,03 % à 0,07 %, Si à hauteur de 0,3 % ou moins, Mn à hauteur de 1,20 % à 1,40 %, Nb à hauteur de 0,015 % à 0,030 %, V à hauteur de 0,10 % à 0,15 %, Ti à hauteur de 0,015 % à 0,025 %, Ni à hauteur de 0,25 % à 0,45 %, Cr à hauteur de 0,30 % à 0,50 %, Al à hauteur de 0,010 % à 0,06 %, N à hauteur de 0,010 % à 0,023 %, P à hauteur de 0,015 % ou moins, S à hauteur de 0,010 % ou moins, O à hauteur de 0,004 % ou moins, et le reste étant du Fe et des impuretés inévitables.

2. Le profilé acier H de la revendication 1, dans lequel 0,10 % ≤ V + Ti + Nb ≤ 0,20 %.

3. Le profilé acier H de la revendication 1 ou de la revendication 2, en ce qui concerne le profilé acier H, la limite d'élasticité étant supérieure ou égale à 460 MPa mesurée à l'aide du procédé suivant la norme ISO6892-1-2009Méthode d'essai de traction de matériaux métalliques à température ambiante, la limite d'élasticité à la traction étant supérieure ou égale à 600 MPa mesurée à l'aide du procédé suivant la norme ISO6892-1-2009Méthode d'essai de traction de matériaux métalliques à température ambiante, l'allongement étant supérieur ou égal à 18 % mesuré à l'aide du procédé suivant la norme ISO6892-1-2009Méthode d'essai de traction de matériaux métalliques à température ambiante, et l'énergie d'impact longitudinale à -40 °C étant supérieure ou égale à 100 J mesurée à l'aide du procédé suivant la norme ISO148-1 Matériaux métalliques - Essai d'impact pendulaire Charpy et où la mesure est réalisée à l'aide d'un essai avec entaille en V sur Charpy.

4. Un procédé de préparation du profilé acier H de n'importe lesquelles des revendications 1 à 3, comprenant en séquence des étapes de prétraitement de métal chaud, de fusion par convertisseur, d'affinage, de coulée continue, de laminage, de refroidissement et de dressage,
dans lequel, dans le processus de laminage, la température de maintien du four de réchauffage est de 1 230 à 1 280 °C, le temps dans le four de l'ébauche de coulée est de 120 à 200 min ; la température de laminage de départ est de 1 150 à 1 180 °C, le circuit d'eau de refroidissement entre les supports de laminage de finition est entièrement ouvert, et la température de laminage de finition est de 750 à 860 °C,
dans lequel l'acier laminé après le laminage de finition sort d'un train finisseur et entre ensuite dans une table à rouleaux avec une coiffe de conservation de chaleur pour une conservation de la chaleur, et entre ensuite dans un lit froid pour un refroidissement lent.

5. Le procédé de préparation de la revendication 4, dans lequel le degré de surchauffe de l'acier fondu de panier de coulée continue est inférieur ou égal à 25 °C.
